Europäisches Patentamt

European Patent Office

Office européen des brevets

(19)

(11) Veröffentlichungsnummer : **0 180 883**
**B1**

(12) **EUROPÄISCHE PATENTSCHRIFT**

(45) Veröffentlichungstag der Patentschrift :
07.06.89

(21) Anmeldenummer : 85113679.6

(22) Anmeldetag : 28.10.85

(51) Int. Cl.⁴ : **B 65 H 75/38**, H 02 G 11/02

(54) **Vorrichtung zum Aufwickeln eines Kabels.**

(30) Priorität : 07.11.84 DE 3440548

(43) Veröffentlichungstag der Anmeldung :
14.05.86 Patentblatt 86/20

(45) Bekanntmachung des Hinweises auf die Patenterteilung : 07.06.89 Patentblatt 89/23

(84) Benannte Vertragsstaaten :
DE FR GB IT

(56) Entgegenhaltungen :
DE–A– 2 607 950
DE–B– 1 218 840
DE–U– 7 927 019
DE–U– 8 237 224
DE–U– 8 237 226

(73) Patentinhaber : **Napierski, Reinhard**
**Talstrasse 18**
**D-6361 Niddatal 1 (DE)**

(72) Erfinder : **Napierski, Reinhard**
**Talstrasse 18**
**D-6361 Niddatal 1 (DE)**

(74) Vertreter : **Jochem, Bernd, Dipl.-Wirtsch.-Ing. et al**
**Staufenstrasse 36 Postfach 17 41 09**
**D-6000 Frankfurt/Main (DE)**

EP 0 180 883 B1

Jouve, 18, rue St-Denis, 75001 Paris, France

## Beschreibung

Die Erfindung betrifft eine Vorrichtung zum Aufwickeln eines Kabels, mit einer Kabeltrommel und einem Kabelführungsteil, einer zwischen diesen wirksamen, durch die relative Drehbewegung beim Abspulen von Kabel zunehmend gespannten Spiralfeder und einer Arretiereinrichtung zum Halten einer bestimmten Relativstellung der Teile bei gespannter Spiralfeder, bestehend einerseits aus wenigstens einem Sperrglied, andererseits aus wenigstens einer Nocke, wobei auf derjenigen Seite der Nocke oder des Sperrglieds, an welcher sie beim Abspulen von Kabel aneinander entlang gleiten, eine die entgegengesetzte Drehbewegung blockierende Anschlagfläche angeordnet ist.

Kabelaufroller der genannten Art brauchen die Arretiereinrichtung, um nach dem Herausziehen einer bestimmten Länge Kabel die Kabeltrommel festzuhalten. Es ist bekannt, hierfür eine Sperrklinke zu verwenden, die z. B. an einer Stirnseite der Kabeltrommel gelagert und mit einer Feder verbunden ist, während im Beispielsfall auf Seiten des Gehäuses eine Nockenbahn angeordnet ist, die wenigstens einen gegen Drehung durch die Spiralfeder sperrenden radialen Nocken und wenigstens eine radiale Aussparung hat, in deren Bereich sich die Sperrklinke von einer in die andere Drehrichtung drehen kann (DE-U-82 37 224). Es ist dabei auch bereits bekannt, die Sperrklinke einstückig mit einer Blattfeder aus Kunststoff herzustellen (vgl. auch DE-U 81 32 204.6). Die bekannten Sperrklinken haben jedoch sämtlich den Nachteil, daß sie das Zusammenfügen der Einzelteile der Wickelvorrichtung nur in bestimmten Drehwinkelstellungen der Kabeltrommel zulassen und in den anderen Stellungen die Montage blockieren.

Es stellt sich daher die Aufgabe, eine Vorrichtung der eingangs genannten Art mit einer Arretiereinrichtung zu schaffen, welche besser zu montieren und im Gebrauch angenehmer zu handhaben ist.

Zur Lösung dieser Aufgabe wird vorgeschlagen, daß das Sperrglied eine Federzunge ist, welche quer zur Umfangsrichtung der Kabeltrommel elastisch nachgiebig und bei entgegengesetzten relativen Drehbewegungen an entgegengesetzten Seiten der Nocke entlang leitbar ist.

Bei dieser Arretiereinrichtung brauchen in bevorzugter Ausführung keine extra Teile hergestellt und montiert werden, denn die Federzunge wird im Beispielsfall an der Kabeltrommel mit angespritzt, und das Gegenstück, die Nocke, wird am Deckel angespritzt. Die Federzunge ist relativ lang ausgelegt, um hierfür kein spezielles Federmaterial verwenden zu müssen.

In zweckmäßiger Ausgestaltung der Erfindung weist die Nocke zwei Auflaufschrägen auf, die die Federzunge je nach Bewegungsrichtung entgegengesetzt ablenken. Es versteht sich, daß die Erstreckung der Federzunge zur Nocke hin statt radial, auch axial sein kann, da die neue Arretiereinrichtung lageunabhängig ist und auch nicht von der jeweiligen Konstruktion der Kabeltrommel des Gehäuses oder des Deckels abhängt.

Die Federzunge weist vorzugsweise zwei Schrägen auf, die entsprechend den Auflaufschrägen der Nocke geformt sind. Dies ermöglicht, daß die Federzunge, von welcher Seite sie auch gegen die Nocke fährt, abgelenkt wird.

Die neue Arretiervorrichtung ist besonders vorteilhaft bei auf Demontierbarkeit ausgelegten Vorrichtungen zum Aufwickeln eines Kabels, weil bei den Montagevorgängen nicht mehr auf die relative Drehwinkelstellung der Teile geachtet werden muß. Die z. Zt. gebräuchlichen derartigen Aufwickelvorrichtungen, wie sie z. B. in der DE-A-25 44 828 und der DE-U-79 27 019 beschrieben sind, haben ein Gehäuse mit zwei Ein- und Auslaufführungen für das Kabel und eine Kabeltrommel, auf der das Kabel an einer mittleren Stelle festlegbar ist. Das Kabel wird beim Einlegen an einer Zwischenwand der Kabeltrommel festgelegt und so lange um diese herumgeführt, bis es auf der Trommel aufgewickelt ist.

Die bekannten Vorrichtungen haben den Nachteil, daß die äußeren Windungen des aufgewickelten Kabels leicht von der Trommel herunterfallen können, bevor sie in das schützende Gehäuse eingebracht ist. Hierbei passiert es auch, daß das Kabel sich zwischen den Gehäusehälften einklemmt.

Um eine Vorrichtung zu erhalten, bei der das Kabel in sehr einfacher Weise auf die Kabeltrommel aufgebracht werden kann, wird in weiterer zweckmäßiger Ausgestaltung der Erfindung vorgeschlagen, daß die Kabeltrommel versenkt im Bodenteil des Gehäuses gelagert ist und mit diesem über die Spiralfeder im Eingriff steht, und daß die Kabeltrommel zum erstmaligen Aufwickeln des Kabels von Hand nur in Aufwickelrichtung relativ zum Bodenteil frei drehbar ist, wobei ein mit dem inneren Ende der Spiralfeder in Eingriff zu bringender Haken dieses nach Art eines Freilaufs radial nachgiebig zurückdrängt.

In bevorzugter Ausgestaltung der letztgenannten Ausführung erstreckt sich ein Einlegeschlitz für das Kabel in der Kabeltrommel quer zu ihrer Längsachse und axial bis zur Mitte ihrer Wickelkammer, wobei er sich über Schrägflächen in Wickelrichtung radial nach außen zunehmend verbreitert. Dadurch wird erreicht, daß das Kabel, wenn es von der Kabeltrommel vollständig abgezogen wird, nicht aus dem Einlegeschlitz herausfällt oder seine Lage auf der Trommel verändert. Dies wird auch dadurch ermöglicht, daß die Flanken, die das Kabel in der Mitte der Wickelkammer halten, versetzt zur Achse des Einlegeschlitzes angeordnet sind.

Um zu verhindern, daß beim automatischen Aufspulen des Kabels durch Federrückzug das Kabel sich nur im unteren Bereich auf die Trommel aufwickelt, sollten die gegenüberliegenden Ein-Auslaufführungen im Gehäuse in Bezug auf die Wickelkammer versetzt angeordnet sein. Dies wird vorzugsweise dadurch erreicht, daß die Ein-Auslaufführungen im Bodenteil unterschiedliche Aussparungshöhen aufweisen, wobei die eine Ein-Auslaufführung etwa bis zur Hälfte geschlossen ist und die andere durch eine Schürze am Deckel entgegengesetzt bis zur Hälfte verschließbar ist.

Bei Kabelaufwickelvorrichtungen, bei denen zwischen Kabeltrommel und Gehäuse eine Spiralfeder angeordnet ist und die Endverbraucher jederzeit die Kabeltrommel herausnehmen und wieder einsetzen können (vgl. z. B. DE-OS 25 44 828), ergibt sich das weitere Problem, daß die Buchse mit einem verhältnismäßig großen Durchmesser im Zentrum der Feder sitzt. Beim Spannen der Feder zieht sich diese fest um die Buchse. Das Zusammenziehen kann aber nur soweit erfolgen, wie es der Buchsenaußendurchmesser zuläßt, und dieser ist bisher identisch mit dem Durchmesser des Hakeneingriffs in das innere Ende der Spiralfeder. Es kann deshalb passieren, z. B. beim schnellen Entspannen der Spiralfeder, daß das innere Ende der Spiralfeder soweit aufspringt, daß danach der Haken an der Buchse das Federende nicht mehr erreichen kann, und somit die Kabelaufwickelvorrichtung unbrauchbar ist.

Um bei der erfindungsgemäßen Vorrichtung diese nachteilige Konstruktion zu vermeiden, wird vorgeschlagen, daß der Umschlingungsdurchmesser um den Haken kleiner ist als der Durchmesser des Kreisbogens um die Drehachse, auf dem die radiale Außenkante des Hakens liegt.

Diese Ausführung ermöglicht es, daß das innere Ende der Spiralfeder kleiner vorgespannt wird, damit das entspannte Federende, das in bestimmten Fällen weiter aufspringt als die Vorspannung, immer noch in dem Bereich des Hakens bleibt.

Der Haken kann z. B. nasenförmig oder als Balken von der Buchse oder auch von einem Zapfen radial nach außen zeigen. Bei größeren Ausführungen ist es vorteilhaft, daß der Haken ein Zapfen ist und unabhängig außer Mitte steht. Zum einfachen Einkuppeln kann der Haken oder Zapfen in Einkuppelrichtung konisch ausgelegt werden.

Die Erfindung wird nachstehend anhand der Zeichnung näher erläutert. Es zeigen :

Fig. 1 einen Längsschnitt durch eine Kabelaufwickelvorrichtung mit Kabeltrommel ;

Fig. 2 einen Querschnitt im Bereich der Feder durch die Wickelvorrichtung nach Fig. 1 ;

Fig. 3 einen Querschnitt im Bereich der Wickelkammer durch die Wickelvorrichtung nach Fig. 1 ;

Fig. 4 einen Querschnitt oberhalb der Arretierung durch die Wickelvorrichtung nach Fig. 1 ;

Fig. 5 eine Nockenbahn mit angedeuteten Federzungen in verschiedenen Stellungen.

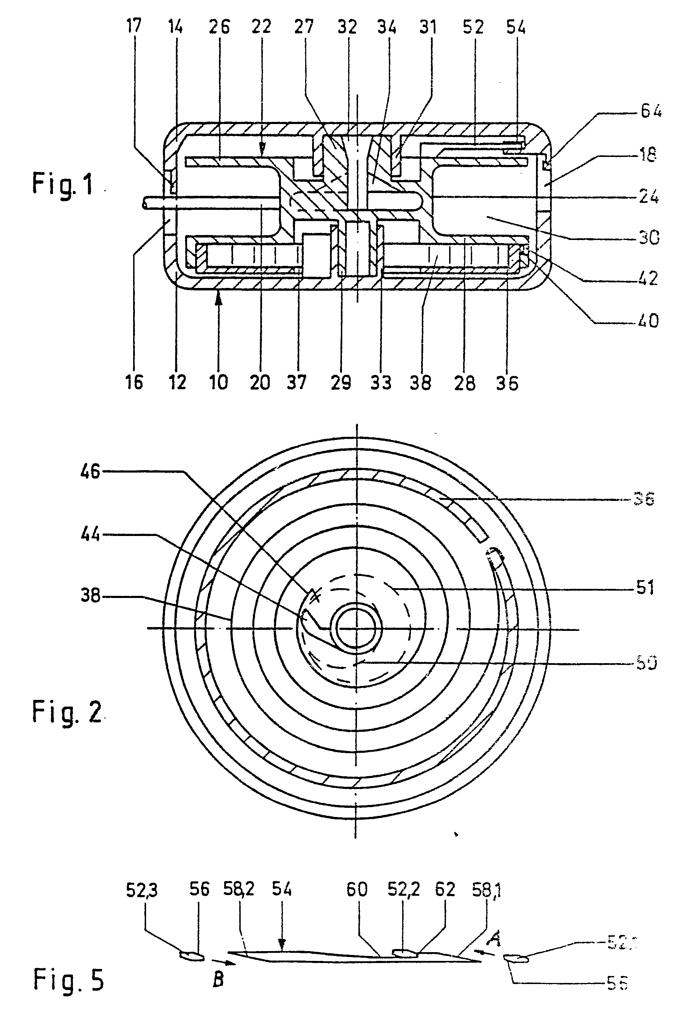

Die in Fig. 1 gezeigte Vorrichtung zum Aufwickeln eines Kabels ist im Grundaufbau ähnlich der DE-OS 25 44 828 und besteht aus einem Gehäuse 10, welches in ein Bodenteil 12 und einen Deckel 14 unterteilt ist. Hierbei erstreckt sich das Bodenteil 12 so weit, daß die darin befindliche Kabeltrommel 22 darin versenkt ist.

Das Gehäuse hat zwei Ein-Auslaufführungen 16, 18 für das mit 20 bezeichnete Kabel, welches auf eine Kabeltrommel 22 aufwickelbar ist. Letzteres ist beidseitig in dem Bodenteil 12 und Deckel 14 gelagert und gliedert sich in Nabe 24 und daran ansetzende Wände 26, 28, wobei die Wand 28 als Federaufnahme bezeichnet wird. Diese radialen Wände bilden die Wickelkammer 30, in der das aufgewickelte Kabel lagert. An der Kabeltrommel 22 sind axial zwei Lagerzapfen 27, 29 angeformt, die in entsprechende Lagerbuchsen 31, 33 im Bodenteil 12 und Deckel 14 hineinpassen.

Die Kabeltrommel 22 hat einen Einlegeschlitz 32, der sich von oben bis zur Mitte der Wickelkammer 30 erstreckt und auf dieser Strecke nach unten in Wickelrichtung breiter wird, so daß das einzulegende Kabel 20, wenn es nicht gleich in seine Endstellung Mitte der Wickelkammer 30 eingelegt worden ist oder durch Eigenfederung im Bereich des Einlegeschlitzes 32 sich befindet, durch Drehen der Kabeltrommel 22 über die Schräge 34 zur Mitte der Wickelkammer 30 von selbst hineinrutscht. An dieser Stelle liegt das Kabel 20 dann relativ zur Kabeltrommel 22 fest. Wird die Kabeltrommel 22 weiter gedreht, so werden, von der festgelegten Stelle des Kabels aus betrachtet, beide Enden des Kabels gleichzeitig in die Wickelkammer 30 der Kabeltrommel aufgewickelt oder bei Zug am außenliegenden Kabel 20 über die Ein-Auslaufführungen 16, 18 abgewickelt. Die Kabeltrommel 22 steht unter der Drehwirkung einer in der Federschale 36 gelagerten Spiralfeder 38. Die Federschale 36 rastet mit ihren Noppel 40 in die Aussparungen 42 der Federaufnahme 28 ein. Diese Aussparungen 42 sind bevorzugt so angeordnet, daß sie mit dem Einlegeschlitz 32 fluchten. Bei der Montage des Kabels 20 wird so vorgegangen, daß zunächst beim geöffneten Deckel 14 die Kabeltrommel 22 mit ihrem Einlegeschlitz 32 so gedreht wird, daß der Einlegeschlitz 32 mit den Ein-Auslaufführungen 16, 18 fluchtet. Jetzt kann das Kabel 20 gleichzeitig in den Einlegeschlitz 32 und in die Ein-Auslaufführungen 16, 18 eingelegt werden. Bei Drehung der Kabeltrommel 22 wird das Kabel 20 über die Ein-Auslaufführungen 16, 18 eingezogen und in der Wickelkammer 30 gespeichert.

Sollte das Kabel 20 gewechselt werden, so muß die Kabeltrommel 22 aus dem Bodenteil 12 entnommen werden, um das Kabel von der Kabeltrommel 22 spannungslos abzuwickeln. Jetzt wird die leere Kabeltrommel 22 wieder in das Bodenteil 12 eingesetzt ; hierbei wird der Zapfen 29 in die Buchse 33 eingeführt und gleichzeitig der Haken 44 in den Bereich des Federendes 46 gebracht. Somit ist wieder der Zustand eingetreten, um ein neues Kabel einzusetzen.

Die Besonderheit der Wickelvorrichtung nach Fig. 1 und Fig. 2 besteht darin, daß die Kabeltrommel 22 versenkt in dem Bodenteil 12 herausnehmbar gelagert ist und mit diesem über die Spiralfeder 38 im Eingriff steht, und daß die Kabeltrommel 22 zum erstmaligen Aufwickeln des Kabels 20 von Hand nur in eine Richtung relativ zum Gehäuse frei drehbar ist, wobei der Haken 44 das innere Ende 46 der Spiralfeder 38 radial zurückdrängt.

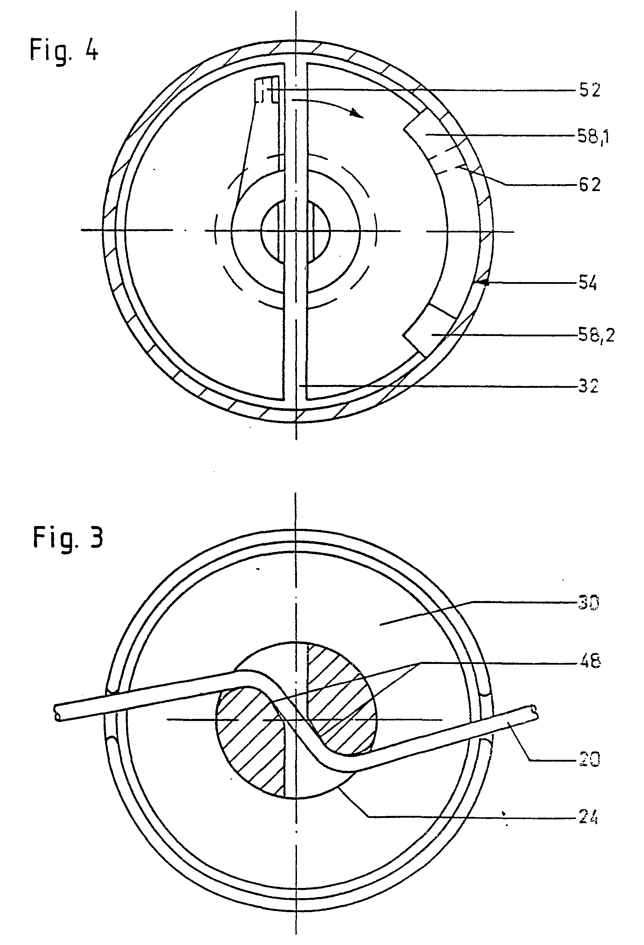

In Fig. 3 ist ein Querschnitt im Bereich der Wickelkammer 30 durch die Wickelvorrichtung nach Fig. 1 gezeigt. Man kann hier die Lage des Kabels 20 sehen, das sich durch die Kabeltrommel 22 entlang der Flanken 48 erstreckt und versetzt zur Achse des Einlegeschlitzes 32 angeordnet ist.

Um das Kabel 20 auf der Wickelkammer 30 beim automatischen Aufwickeln des Kabels 20 besser zu verteilen, sind die Ein-Auslaufführungen 16, 18 im Gehäuse 10 in Bezug auf die Wickelkammer 30 versetzt angeordnet. Dies ist immer dann nötig, wenn die Kabelaufwickelvorrichtung beim automatischen Aufwickeln flach aufliegt. Versuche haben ergeben, daß der Kabelaufwickler nach AT-PS-25 16 74 mit einer Spiralfeder versehen das Kabel nicht einwandfrei aufwickeln kann, da das Kabel sich durch Schwerkraft nur im unteren Bereich der Wickelkammer sammelt und dadurch den Kabelaufwickler blockiert, bevor die gesamte Wickelkammer bewickelt ist. Dieser Versatz der Ein-Auslaufführungen 16, 18 wird dadurch erreicht, daß am Bodenteil 12 unterschiedliche Aussparungshöhen ausgebildet sind, wobei die eine Ein-Auslaufführung 18 in etwa bis zur Hälfte geschlossen ist und die andere durch die Schürze 17 am Deckel entgegengesetzt bis zur Hälfte verschlossen wird.

In Fig. 2 ist im Beispielsfall die Spiralfeder 38 mit ihrem äußeren Ende an der Federschale 36 befestigt, wobei das innere Ende 46 frei zur Mitte spiralförmig vorgebogen ist. Diese Federschale 36 wird einrastbar in die Federaufnahme 28 montiert.

Somit ist die Kabeltrommel 22 komplett montiert, wobei die Spiralfeder 36 geschützt und nur durch die Bohrung 37 zugängig ist. Das Bodenteil 12 ist mit einer Lagerbuchse ausgerüstet, an der der Haken 44 angespritzt ist. Bei der Montage wird die komplette Kabeltrommel 22 in das Innere des Bodenteils 12 eingekuppelt. Hierbei greift erstmal der Lagerzapfen 29 in die Lagerbuchse 33 ein und richtet somit Kabeltrommel 22 mit dem Bodenteil 12 aus. Beim weiteren Einführen kommt der Haken 44 in den Bereich des inneren Endes der Spiralfeder 38.

Dieses einfache Einkuppeln wird dadurch erreicht, daß dem inneren Ende der Spiralfeder 38 sich nur ein schmaler Haken 44 entgegenstellt. Im ungünstigsten Falle kann es passieren, daß das innere Ende 46 der Spiralfeder 38 genau auf den Haken 44 trifft. Dies kann dann durch eine kleine Drehung der Kabeltrommel behoben werden. Selbstverständlich kann der Haken 44 in Richtung der einzukuppelnden Spiralfeder 38 und zur Lagerbuchse 33 konisch ausgelegt werden, so daß das innere Ende 46 der Spiralfeder auf dem Haken entlanggleitet und somit ohne Drehung die Kabeltrommel einkuppelt. Es besteht selbstverständlich auch die Möglichkeit, eine umgekehrte Konstruktion zu wählen, indem das äußere Ende der Spiralfeder im Bodenteil befestigt ist und das innere Ende der Spiralfeder in einen Haken eingreift, der an der Kabeltrommel mit angespritzt ist.

Diese in Fig. 2 gezeigte weitere Besonderheit der Wickelvorrichtung besteht darin, daß der Umschlingungsdurchmesser 50 (gestrichelt gezeichnet) um den Haken 44 kleiner ist als sein Eingriffdurchmesser 51 (gestrichelt gezeichnet), der in das innere Ende 46 der Spiralfeder 36 eingreift. Dieser Haken 44 kann an einem Zapfen oder Buchse 33 radial nach außen mit angespritzt sein oder auch bei größeren Ausführungen als außer Mitte stehender freier Zapfen angeordnet sein. Diese Ausführung hat nicht nur den Vorteil, daß der innere Bereich der Spiralfeder 38 durch den freien Haken 44 bei jedem Spannen der Spiralfeder 38 enger vorgebogen wird, um dann beim Aufspringen dessen Ende trotzdem noch mit dem Haken 44 zu erreichen, sondern auch noch bei der Montage der Kabeltrommel 22, die mit der Spiralfeder 35 gemeinsam in das Innere des Bodenteils 12 einkuppelt.

Die Ausführung nach Fig. 4 zeigt einen Querschnitt oberhalb der Rasterung durch die Wickelvorrichtung nach Fig. 1. An der Kabeltrommel 22 ist die Federzunge 52 mit angeformt und zeigt radial nach außen. Im äußeren Bereich der Federzunge 52 ist eine Nocke 54 am Deckel angeformt, so daß die Federzunge 52 bei Drehung der Kabeltrommel an der Nocke vorbeistreift.

Die Nocken-Bahn ist in Fig. 5 in der Abwicklung und die Federzunge 52 in drei verschiedenen Stellungen gezeigt. Wird das Kabel 20 von der Kabeltrommel 22 abgezogen, so spannt sich die Spiralfeder 38, und die Federzunge 52,1 gleitet mit ihrer Einlaufschräge 56 auf die Auflaufschräge 58,1 und streift über die Nocke in Pfeilrichtung A. Dies geschieht so lange, bis die gewünschte Kabellänge von der Kabeltrommel 22 abgezogen ist. Jetzt wird nur noch so lange am Kabel gezogen, bis die Federzunge 52,1 über die Nocke 54 streift, und mit einem Klickgeräusch die Federzunge in die Aussparung 60 hineinfedert. Beim Nachlassen des Kabels 20 versucht die Spiralfeder 38 die Kabeltrommel zurückzudrehen, und somit bewegt sich die Federzunge gegen den Anschlag 62. Will man das Kabel 20 wieder auf die Kabeltrommel 22 speichern, so wird am Kabel 20 soweit gezogen, bis die Federzunge 52,2 aus der arretierten Position in die freie Stellung der Federzunge 52,3 kommt. Jetzt kann das Kabel nachgelassen werden und die Federzunge 52,3 streift in Pfeilrichtung B an der Nocke so lange vorbei, bis das Kabel wieder auf der Kabeltrommel aufgewickelt ist. Bei großen Kabelaufwickelvorrichtungen ist es von Vorteil, mehrere Nockenbahnen am Umgang anzuordnen.

Ein Vorteil dieser Konstruktion ist, daß der Deckel 14 aufgesetzt werden kann und mittels Bajonettverschluß 64 mit dem Bodenteil verbunden werden kann, ohne daß die Arretierung wie bei bekannten Vorrichtungen störend im Wege ist. Wenn im Beispielsfall beim Aufsetzen des Deckels 14 die Nocke 54 und die Federzunge 52 genau übereinander stehen, so federt einfach die Federzunge 52 weg. Selbstverständlich kann die Federzunge 52 mit den Nocken 54 axial und auch an irgendeiner anderen Stelle zwischen Kabeltrommel und Gehäuse angeordnet sein.

Die konstruktiven Merkmale der Erfindung sind, daß sich die Federzunge 52 relativ zur Nocke 54 bewegt und in einer Bewegungsrichtung an der einen Nockenseite vorbeistreift und bei entgegengesetzter Bewegungsrichtung an der anderen Nockenseite vorbeistreift. Dies wird dadurch erreicht, daß die Federzunge 52 in ihrer Ruhelage genau mit der Nocke 54 fluchtet und bei Drehung der Kabeltrommel die Federzunge 52 auf die Nocke aufläuft. Hierzu sind zwei Auflaufschrägen 58 an der Nocke 54 und zwei Einlaufschrägen 56 an der Federzunge 52 angeordnet. Zum Stoppen ist in der Nockenbahn ein Anschlag 62 vorgesehen, der entgegengesetzt der Richtung der über die Auflaufschrägen 58,1 streifenden Federzunge 52,1 angeordnet ist.

Aus Kostengründen ist die Federzunge 52 einstückig an der Kabeltrommel 22 und die Nocke 54 am Deckel 14 angeformt. Selbstverständlich können die Federzunge und/oder die Nocke auch als extra Teil ausgelegt sein. Dies ist dann vorteilhaft, wenn der Federzunge nicht genügend Platz zur Verfügung steht, und somit die Federzunge relativ kurz ausgelegt werden muß. Hierbei kann dann die Federzunge aus einem besseren, federnden Material hergestellt sein.

## Patentansprüche

1. Vorrichtung zum Aufwickeln eines Kabels, mit einer Kabeltrommel (22) und einem Kabelführungsteil (10), einer zwischen diesen wirksamen, durch die relative Drehbewegung beim Abspulen von Kabel (20) zunehmend gespannten Spiralfeder (38) und einer Arretiereinrichtung (52, 54) zum Halten einer bestimmten Relativstellung der Teile (10, 22) bei gespannter Spiralfeder (38), bestehend einerseits aus wenigstens einem Sperrglied (52), andererseits aus wenigstens einer Nocke (54), wobei auf derjenigen Seite der Nocke (54) oder des Sperrglieds (52), an welcher sie beim Abspulen von Kabel (20) aneinander entlang gleiten, eine die entgegengesetzte Drehbewegung blockierende Anschlagfläche (62) angeordnet ist, dadurch gekennzeichnet, daß das Sperrglied (52) eine Federzunge ist, welche quer zur Umfangsrichtung der Kabeltrommel (22) elastisch nachgiebig und bei entgegengesetzten relativen Drehbewegungen an entgegengesetzten Seiten der Nocke (54) entlang leitbar ist.

2. Vorrichtung nach Anspruch 1, dadurch gekennzeichnet, daß die Nocke (54) zwei Auflaufschrägen (58) aufweist, die die Federzunge (52) je nach Bewegungsrichtung entgegengesetzt ablenken.

3. Vorrichtung nach Anspruch 1 oder 2, dadurch gekennzeichnet, daß die Federzunge (52) zwei Einlaufschrägen (56) aufweist, die entsprechend den Auflaufschrägen (58) der Nocke (54) geformt sind.

4. Vorrichtung nach einem der Ansprüche 1 bis 3, dadurch gekennzeichnet, daß die Federzunge (52) einstückig mit der Kabeltrommel (22) oder einem Gehäuseteil (12, 14) und die Nocke (54) einstückig mit dem jeweils anderen dieser beiden relativ zueinander drehbaren Teile (22 ; 12, 14) ausgebildet sind.

5. Vorrichtung nach einem der Ansprüche 1 bis 4, dadurch gekennzeichnet, daß die Federzunge (52) radial nach außen weist und mit ihrem äußeren Bereich an der Nocke (54) angreift.

6. Vorrichtung nach Anspruch 1, dadurch gekennzeichnet, daß die Federzunge (52) und/oder die Nocke (54) als Einzelteil gefertigt und an der Kabeltrommel bzw. am Gehäuse (10) angebracht sind.

7. Vorrichtung nach einem der Ansprüche 1 bis 6, mit einem Gehäuse (10) mit wenigstens zwei Ein- und Auslaufführungen (16, 18) für das Kabel (20) und einer Kabeltrommel (22), auf der das Kabel (20) an einer mittleren Stelle festlegbar ist, dadurch gekennzeichnet, daß die Kabeltrommel (22) versenkt im Bodenteil (12) des Gehäuses (10) gelagert ist und mit diesem über die Spiralfeder (38) im Eingriff steht, und daß die Kabeltrommel (22) zum erstmaligen Aufwickeln des Kabels (20) von Hand nur in Aufwickelrichtung relativ zum Bodenteil (12) frei drehbar ist, wobei ein mit dem inneren Ende (46) der Spiralfeder (38) in Eingriff zu bringender Haken (44) dieses nach Art eines Freilaufs radial nachgiebig zurückdrängt.

8. Vorrichtung nach Anspruch 7, dadurch gekennzeichnet, daß sich ein Einlegeschlitz (32) für das Kabel in der Kabeltrommel (22) quer zu ihrer Längsachse und axial bis zur Mitte ihrer Wickelkammer (30) erstreckt, wobei er sich über Schrägflächen (34) in Wickelrichtung radial nach außen zunehmend verbreitert.

9. Vorrichtung nach Anspruch 7 oder 8, dadurch gekennzeichnet, daß Ein-Auslaufführungen (16, 18) für das Kabel im Bodenteil (12) unterschiedliche Aussparungshöhen aufweisen, wobei die eine Ein-Auslaufführung (18) etwa bis zur Hälfte geschlossen ist und die andere durch eine Schürze (17) am Deckel (14) entgegengesetzt bis zur Hälfte verschließbar ist.

10. Vorrichtung nach Anspruch 7 bis 9, dadurch gekennzeichnet, daß der Umschlingungsdurchmesser (50) um den Haken (44) kleiner ist als der Durchmesser des Kreisbogens (51) um die Drehachse, auf dem die radiale Außenkante des Hakens (44) liegt.

11. Vorrichtung nach Anspruch 10, dadurch gekennzeichnet, daß der Haken (44) von einem Zapfen oder Buchse (33) radial nach außen ragt.

## Claims

1. Cable winding device, with a cable drum (22) and a cable guide part (10), a spiral spring (38) which is effective between these and which is increasingly tensioned by the relative rotational movement as the cable (20) unwinds, and an arresting device (52, 54) for holding a specific relative position of the parts (10, 22) when the spiral spring (38) is tensioned, said device comprising on the one hand at least one latch (52) and on the other hand at least one cam (54) and being such that at that side of the cam (54) or of the latch (52) at which they slide along one another when the cable (20) unwinds there is arranged an abutment surface (62) which blocks the opposite rotational movement, characterised in that the latch (52) is a spring tongue which is yieldable elastically transversely to the circumferential direction of the cable drum (22) and which is conductable along opposite sides of the cam (54) at opposite rotational movements.

2. Device according to claim 1, characterised in that the cam (54) has two inclined camming surfaces (58) which divert the spring tongue (52) oppositely in accordance with the particular direction of movement at the time.

3. Device according to claim 1 or 2, characterised in that the spring tongue (52) has two inclined run-in surfaces (56) which are shaped in accordance with the inclined camming surfaces (58) of the cam (54).

4. Device according to one of claims 1 to 3, characterised in that the spring tongue (52) is made in one piece with the cable drum (22) or with a housing part (12, 14), and the cam (54) is made in one piece with the respective other one of these two parts (22 ; 12, 14) which are adapted to rotate relatively to one another.

5. Device according to one of claims 1 to 4, characterised in that the spring tongue (52) is directed radially outwardly, and its outer region engages on the cam (54).

6. Device according to claim 1, characterised in that the spring tongue (52) and/or the cam (54) are made as separate parts and arranged on the cable drum and the housing (10) respectively.

7. Device according to one of claims 1 to 6, with a housing (10) having at least two entry and exit guides (16, 18) for the cable (20) and with a cable drum (22) to which the cable (20) is fastenable at a central point, characterised in that the cable drum (22) is mounted flush in the base part (12) of the housing (10) and is in engagement therewith by means of the spiral spring (38), and that the cable drum (22) is rotatable freely manually only in the winding direction relatively to the base part (12) for the first winding-on of the cable (20), and a hook which is to be brought into engagement with the inner end (46) of the spiral spring (38) forces this end back radially yieldably in the manner of a freewheel arrangement.

8. Device according to claim 7, characterised in that an insertion slot (32) for the cable is provided in the cable drum (22) and extends transversely relatively to the longitudinal axis thereof and axially as far as the centre of its winding chamber (30), said slot widening increasingly radially outwardly via inclined surfaces (34) in the winding direction.

9. Device according to claim 7 or 8, characterised in that entry-exit guides (16, 18) for the cable have different aperture heights in the base part (12), one entry-exit guide (18) being approximately half closed and the other being closeable up to half way in the opposite sense by an apron (17) on the cover (14).

10. Device according to claims 7 to 9, characterised in that the diameter of looping (50) about the hook (44) is smaller than the diameter of the arc (51) of a circle about the axis of rotation on which the radial external edge of the hook (44) is situated.

11. Device according to claim 10, characterised in that the hook (44) projects radially outwardly from a pin or sleeve (33).

## Revendications

1. Dispositif de bobinage d'un câble, comprenant un tambour d'enroulement (22) et un organe de guidage (10) du câble, un ressort enroulé en spirale (35), disposé entre ce tambour et cet organe, et qui est armé progressivement grâce à la rotation relative produite entre ces éléments lors du déroulement du câble (20), et un dispositif de blocage (52, 54) pour maintenir un positionnement relatif entre l'organe (10), et le tambour (22) lorsque le ressort-spirale (35) est sous tension, ce dispositif de blocage comprenant d'une part au moins un cliquet (52) et d'autre part au moins une encoche (54), de telle sorte que sur le côté soit de l'encoche (54), soit du cliquet (52), il soit prévu une face terminale de butée (62) propre à bloquer le mouvement de rotation en sens contraire du câble pendant le déroulement de celui-ci, ce dispositif étant caractérisé par le fait que le cliquet (52) est constitué par une lame flexible, laquelle peut fléchir élastiquement dans le sens transversal par rapport à la direction périphérique du tambour (22) et peut être guidée le long de côtés opposés de l'encoche (54) pendant les mouvements de rotation relative en sens contraire.

2. Dispositif selon la Revendication 1, caractérisé en ce que l'encoche (54) comporte deux rampes d'arrêt (58) qui écartent dans des sens contraires ledit ressort-lame (52) selon le sens du mouvement.

3. Dispositif selon l'une ou l'autre des Revendications 1 ou 2, caractérisé en ce que le ressort-lame (52) présente deux rampes d'entrée (56) dont le profil correspond à celui des rampes d'arrêt (58).

4. Dispositif selon l'une quelconque des Revendications 1 à 3, caractérisé en ce que le ressort-lame (52) est réalisé d'un seul tenant avec le tambour d'enroulement (22) du câble ou avec l'élément du boîtier (12, 14), et que l'encoche (54) fait partie intégrante de l'un ou l'autre de ces deux éléments tournant par rapport l'un à l'autre de ces deux organes (22 ; 12, 14).

5. Dispositif selon l'une quelconque des Revendications 1 à 4, caractérisé en ce que le ressort-lame (52) est disposé radialement vers l'extérieur et attaque l'encoche (54) avec sa partie extérieure.

6. Dispositif selon la Revendication 1, caractérisé en ce que le ressort-lame (52) et/ou l'encoche (54) sont réalisés d'un seul tenant et incorporés soit au tambour d'enroulement du câble, soit au boîtier (10).

7. Dispositif selon l'une quelconque des Revendications 1 à 6, lequel comprend un boîtier (10) ayant au moins deux ouvertures (16, 18) pour guider l'entrée et la sortie du câble (20), ainsi qu'un tambour d'enroulement (22) pour le câble, sur lequel le câble se fixe par le centre, ce dispositif étant caractérisé en outre par le fait que le tambour d'enroulement (22) du câble est logé dans la partie inférieure (12) du boîtier (10) avec lequel ledit tambour est relié par l'intermédiaire du ressort spirale (38), et que le tambour d'enroulement (22) du câble (20) peut tourner librement par rapport au fond (12) du boîtier au cours du premier enroulement du câble (20), effectué manuellement mais seulement dans le sens de l'enroulement, de façon qu'un crochet (44) solidaire du fond (12) du boîtier accroche l'extrémité interne coudée (46) du ressort-spirale (38) et enroule ce ressort radialement vers le centre comme dans le cas d'un mécanisme de roue-libre.

8. Dispositif selon la Revendication 7, caractérisé en ce qu'il est prévu une fente diamétrale (32) pour l'introduction du câble dans le tambour (22), transversalement par rapport à son axe longitudinal et axialement jusqu'au milieu de sa chambre d'enroulement (30), cette fente (32) s'élargissant radialement vers l'extérieur par l'intermédiaire de surfaces inclinées (34) dans le sens de l'enroulement.

9. Dispositif selon l'une ou l'autre des Revendications 7 ou 8, caractérisé en ce que les ouvertures de guidage d'entrée ou de sortie (16, 18) du câble dans le fond (12) du boîtier ont des hauteurs différentes, afin qu'une de ces ouvertures d'entrée ou de sortie (18) soit fermée sensiblement jusqu'à la moitié, tandis que l'autre peut être verrouillée à l'inverse jusqu'à la moitié grâce à une jupe (17) du couvercle (14).

10. Dispositif selon l'une quelconque des Revendications 7 à 9, caractérisé en ce que le diamètre d'enroulement (50) autour du crochet (44) est inférieur au diamètre de l'arc de cercle (51) qui entoure l'axe de rotation et sur lequel se trouve ledit crochet (44).

11. Dispositif selon la Revendication 10, caractérisé en ce que le crochet (44) fait saillie radialement vers l'extérieur à partir d'un pivot ou d'une douille centrale (33).

Fig. 1

Fig. 2

Fig. 5

Fig. 4

52

58,1

62

54

58,2

32

Fig. 3

30

48

20

24